# EUROPÄISCHE PATENTANMELDUNG

(11) **EP 3 078 921 A1**
(43) Veröffentlichungstag der Anmeldung: **12.10.2016**
(21) Anmeldenummer: 15163029.0
(22) Anmeldetag: 09.04.2015
(51) Int. Cl.: F24J 2/52, B64C 1/14, F24J 2/46

(54) **VERFAHREN UND WERKZEUG ZUM EINBRINGEN EINES KLEB- UND/ODER DICHTSTOFFES IN EINE FUGE ZWISCHEN EINEM RAHMEN UND EINEM VOM RAHMEN UMFASSTEN FLACHELEMENT**

(71) Anmelder: Sika Technology AG, 6340 Baar (CH)
(72) Erfinder: Buck, Manuel, 5412 Gebenstorf (CH)
(74) Vertreter: Sika Patent Attorneys

(57) **Zusammenfassung**

Die Erfindung betrifft ein Verfahren zum Einbringen eines Kleb- und/oder Dichtstoffes in eine Fuge (24) zwischen einem Flächenelement (14), insbesondere Solarpanel, und einem das Flächenelement (14) aufnehmenden Rahmenelement (10), insbesondere Dachziegel, umfassend die Schritte:
a) Bereitstellen und Positionieren des Rahmenelementes (10);
b) Einbringen einer Raupe aus Kleb- und/oder Dichtstoff in das Rahmenelement (10);
c) Positionieren des Flächenelementes (14) innerhalb des Rahmenelementes (10) nach dem Schritt b); und
d) Positionieren eines Abdichtelementes (16) derart, dass das Abdichtelement (16) die Fuge (24) sowie wenigstens an die Fuge (24) angrenzende Abschnitte des Flächenelementes (14) und des Rahmenelementes (10) überdeckt.

## Beschreibung

### Technisches Gebiet

Die Erfindung betrifft ein Verfahren zum Einbringen eines Kleb- und/oder Dichtstoffes in eine Fuge zwischen einem Flächenelement, insbesondere einem Solarpanel, und einem das Flächenelement aufnehmenden Rahmenelement, insbesondere Dachziegel, nach Anspruch 1, eine Einheit aus einem Flächenelement und einem Rahmenelement nach Anspruch 7, ein Werkzeug für ein Verfahren zum Einbringen eines Kleb- und/oder Dichtstoffes nach Anspruch 8 sowie ein System umfassend das Werkzeug und ein Set aus einem Flächenelement, einem Rahmenelement sowie einem Kleb- und/oder Dichtstoff nach Anspruch 10.

### Stand der Technik

Flächenelemente, wie beispielsweise Solarpanele, werden oftmals in eine entsprechende Öffnung eines Rahmenelementes eingeklebt. Eine entsprechende Kleberaupe wird dazu in eine Fuge (Spalt) zwischen dem Flächenelement und dem Rahmenelement eingebracht. In diesem Zusammenhang ist der Aufwand für das Ausfüllen der Fuge, wobei die Kleberaupe möglichst plan mit dem Flächenelement und dem Rahmenelement abschließen soll - ohne hervorzutreten oder die Sichtseite zu verschmieren, jedoch auch ohne eine zu geringe Verfüllung des Spalts - im Stand der Technik vergleichsweise groß. Bisher wurde der austretende Klebstoff nach dem Verfüllen entfernt. Dieser zusätzliche Schritt ist vergleichsweise zeit- und kostenintensiv und begrenzt die Taktzeit der Produktion.

Es ist daher Aufgabe der Erfindung, ein Verfahren zum Einbringen eines Kleb- und/oder Dichtstoffes in eine Fuge vorzuschlagen, bei dem mit geringem Aufwand eine ausreichende Ausfüllung der Fuge erreicht wird, wobei insbesondere Verschmutzungen vermieden werden sollen. Weiterhin soll eine Einheit aus einem Flächenelement und einem Rahmenelement, ein Werkzeug für das Verfahren zum Einbringen eines Kleb- und/oder Dichtstoffes sowie ein System umfassend ein Werkzeug sowie ein Set aus einem Flächenelement, einem Rahmenelement sowie einem Kleb- und/oder Dichtstoff vorgeschlagen werden.

### Darstellung der Erfindung

Diese Aufgabe wird durch ein Verfahren nach Anspruch 1, eine Einheit nach Anspruch 7, ein Werkzeug nach Anspruch 8 sowie ein System nach Anspruch 10 gelöst. Weiterbildende Aspekte der Erfindung werden in den abhängigen Ansprüchen definiert.

Insbesondere wird die Aufgabe gelöst durch ein Verfahren zum Einbringen eines Kleb- und/oder Dichtstoffes in eine Fuge zwischen einem Flächenelement, insbesondere Solarpanel, und einem das Flächenelement aufnehmenden Rahmenelement, insbesondere Dachziegel, umfassend die Schritte:
a) Bereitstellen und Positionieren des Rahmenelementes;
b) Einbringen einer Raupe aus Kleb- und/oder Dichtstoff in das Rahmenelement;
c) Positionieren des Flächenelementes innerhalb des Rahmenelementes nach dem Schritt b); und
d) Positionieren eines Abdichtelementes derart, dass das Abdichtelement die Fuge sowie wenigstens an die Fuge angrenzende Abschnitte des Flächenelementes und des Rahmenelementes überdeckt.

Ein wesentlicher Gedanke der Erfindung liegt darin, ein Abdichtelement vorzusehen, das die (gesamte) Fuge zwischen Flächenelement und Rahmenelement sowie angrenzende Abschnitte des Flächen- und Rahmenelementes überdeckt. Dadurch kann wirkungsvoll verhindert werden, dass Kleb- und/oder Dichtstoff nach außen dringt und das Flächen- und/oder Rahmenelement verschmutzt. Insofern beispielsweise im Schritt c) aufgrund des Positionierens des Flächenelementes bereits ein geringer Anteil von Kleb- und/oder Dichtstoff nach außen gequollen ist, wird er durch die Überdeckung durch das Abdichtelement wieder zurück in die Fuge gedrängt. Weiterhin schließt eine Sichtseite der Raupe aufgrund des Abdichtelementes vergleichsweise plan mit dem Flächenelement bzw. dem Rahmenelement ab, ohne hervorzutreten oder die Sichtseite zu verschmieren (ohne aber auch eine zu geringe Verfüllung der Fuge). Ein aufwendiges Entfernen von ausgetretenem Kleb- und/oder Dichtstoff ist nicht notwendig. Grundsätzlich ist festzustellen (da Schritt c) nach dem Schritt b) erfolgt), dass das Flächenelement die Raupe von Kleb- und/oder Dichtstoff während des Schrittes c) belastet. Der Kleb- und/oder Dichtstoff zwischen Rahmenelement und Flächenelement hat daher die Tendenz, nach oben zu quellen. Dieser Tendenz wird jedoch durch die Erfindung wirkungsvoll und mit einfachen Maßnahmen entgegen getreten.

Grundsätzlich kann es sich bei dem Flächenelement um ein Plattenelement (Platte) handeln, beispielsweise um ein Solarpanel. Das Rahmenelement kann entweder ein freistehender Rahmen sein oder Bestandteil einer kompakten Struktur, die in Form einer (beispielsweise rechteckförmigen) Ausnehmung einen Rahmen definiert. Konkret kann es sich bei dem Rahmenelement um einen Dachziegel handeln, der eine (rechteckförmige) Ausnehmung bzw. Mulde (Vertiefung) aufweist. Alternativ kann es sich bei dem Flächenelement auch um ein Glaskeramik-Kochfeld handeln, das in ein Rahmenelement eines entsprechenden Küchenherds eingeklebt werden kann.

Das Rahmenelement, insbesondere der Dachziegel, weist vorzugsweise eine Öffnung zur rückseitigen Kontaktierung des Flächenelementes, insbesondere Solarpanels auf.

Das Flächenelement ist vorzugsweise plattenförmig und kann ggf. rechteckig (insbesondere quadratisch) ausgebildet sein, also einen (flachen) Quader definieren. Bei den folgenden Werten handelt es sich - soweit nicht abweichend angegeben - um Mittelwerte. Ein (maximaler) Durchmesser des Flächenelementes bzw. eine Längskante des Flächenelementes (wenn dieses als Rechteck vorliegt) kann mindestens 10 cm, vorzugsweise mindestens 30 cm, noch weiter vorzugsweise mindestens 60 cm und/oder höchstens 2 m, vorzugsweise höchstens 1,5 m, noch weiter vorzugsweise 1 m betragen. Die Fuge bzw. ein Abstand zwischen Flächenelement und Rahmenelement kann mindestens 2 mm, vorzugsweise mindestens 4 mm und/oder höchstens 3 cm, vorzugsweise höchstens 1 cm, weiter vorzugsweise höchstens 0,5 cm betragen. Das Rahmenelement kann (entsprechend dem Flächenelement) eine rechteckförmige Geometrie aufweisen, also beispielsweise als Rechteck-Rahmen ausgebildet sein.

Bei einem Kleb- und/oder Dichtstoff kann es sich um einen Kleb- und/oder Dichtstoff auf Silikonbasis handeln. Unter einem Klebstoff soll vorzugsweise ein Stoff verstanden werden, der eine stoffschlüssige Verbindung zwischen zwei Teilen ermöglicht. Bei einem Dichtstoff handelt es sich vorzugsweise um einen elastischen Dichtstoff. Es kommen jedoch auch Zement und andere ggf. unelastische Dichtstoffe in Frage.

In einer bevorzugten Ausführungsform des Verfahrens wird das Flächenelement in Schritt c) auf die Raupe, insbesondere drucklos, aufgelegt. Unter "drucklosem" Auflegen soll ein Auflegen verstanden werden, bei dem das Flächenelement nicht aktiv gegen die Raupe gedrückt wird (zumindest zunächst), sondern nur aufgrund seines Eigengewichts (ggf. reduziert durch ein Anheben bzw. Festhalten) mit der Raupe in Kontakt kommt. Vorzugsweise kann unter "drucklos" also verstanden werden, dass (in einem Zwischenschritt) eine durch das Flächenelement auf die Raupe wirkende Kraft maximal zweimal, vorzugsweise maximal 1,5 mal der Gewichtskraft des Flächenelementes entspricht. Dadurch, dass das Flächenelement (in einem Zwischenschritt) zunächst (drucklos) aufgelegt wird, wird während dieser Phase des Positionierens des Flächenelementes ein übermäßiges Herausquellen von Kleb- und/oder Dichtstoff auf einfache Weise vermieden. Dadurch muss dann beispielsweise im Schritt des Positionierens des Abdichtelementes weniger oder gar kein Kleb- und/oder Dichtstoff zurück in die Fuge gedrückt werden, was Verschmutzungen reduziert. Sobald das Abdichtelement zumindest oberhalb der Raupe und dem Flächenelement angeordnet ist, wird durch das Abdichtelement ein weiteres Herausquellen verringert oder sogar verhindert.

In einer konkreten Ausführungsform des Verfahrens wird das Flächenelement durch eine Bewegung des Abdichtelementes (in Richtung einer Oberfläche des Flächenelementes und/oder in vertikaler Richtung) in seine Endposition überführt. Konkret kann das Abdichtelement zunächst mit dem Flächenelement in Kontakt gebracht werden. Nach dem In-Kontakt-Bringen wird das Flächenelement durch das Abdichtelement weiter in Richtung seiner Endposition innerhalb des Rahmenelementes geführt. Durch diese Phase der gemeinsamen Bewegung von Flächenelement und Abdichtelement wird simultan zu einer Tendenz des Herausquellens von Kleb- und/oder Dichtstoff aufgrund des Fortbewegens des Flächenelementes eine Gegenmaßnahme durch die gemeinsame Bewegung mit dem Abdichtelement realisiert, was auf effektive Art und Weise ein Herausquellen von Kleb- und/oder Dichtstoff verhindert.

In einer bevorzugten Ausgestaltung des Verfahrens wird das Abdichtelement derart mit Druck beaufschlagt, dass es gegen die an die Fuge angrenzenden Abschnitte des Flächenelementes und des Rahmenelementes angepresst wird. Durch eine derartige Pressdichtung wird die Verhinderung des Austretens von Kleb- und/oder Dichtstoff weiter verbessert. Allgemein kann jedoch auch ein gewisses Maß an Dichtigkeit allein dadurch realisiert werden, dass das Abdichtelement entsprechend auf die Fuge und an die Fuge angrenzende Abschnitte des Flächenelementes und des Rahmenelementes aufgelegt wird. In jedem Fall bildet nämlich das Abdichtelement eine strukturelle Abgrenzung. Eine gewisse Dichtigkeit kann zusätzlich auch durch das Eigengewicht des Abdichtelementes realisiert werden. Die Druckkraft aufgrund des "Anpressen" bzw. der "Pressdichtung" kann mindestens dem 2-fachen, vorzugsweise mindestens dem 4-fachen einer Druckkraft entsprechen, die aus dem Eigengewicht des Abdichtelementes resultieren würde. Ein Druck (ohne Berücksichtigung des Drucks aufgrund des Gewichts des Abdichtelementes) kann mindestens 1 bar, vorzugsweise mindestens 5 bar, noch weiter vorzugsweise mindestens 10 bar betragen.

Das Abdichtelement kann zumindest abschnittsweise elastisch sein (beispielsweise Federelemente umfassen). Insbesondere kann das Abdichtelement zumindest abschnittsweise, vorzugsweise in Bereichen, die mit dem Flächenelement und/oder Rahmenelement in Kontakt kommen (ggf. über ein Folienelement) aus einem elastischen Material, wie beispielsweise einem elastischen Polymer (z.B. Polyolefin, insbesondere Polyethylen und/oder Polypropylen) gefertigt sein. Die elastischen Abschnitte können insbesondere aus einem aufgeschäumten Material gebildet werden. Auch Silikon und/oder Kautschuk ist möglich. Durch eine gewisse Elastizität wird einerseits verhindert, dass Flächenelement und/oder Rahmenelement beschädigt werden. Andererseits wird auf synergistische Weise eine Abdichtung zur Verhinderung von Kleb- und/oder Dichtstoffaustritt realisiert.

Das Abdichtelement kann (vorzugsweise elastische bzw. aus einem elastischen Material gebildete) Presselemente (bezüglich der Materialien wird auf den vorherigen Absatz verwiesen) mit einer Kontur aufweisen, die vorzugsweise einer Kontur der Fuge entspricht. Das eine oder die mehreren Presselemente können also beispielsweise eine rahmenartige Kontur aufweisen. Bei einer Rechteck-Fuge ist das Anpresselement vorzugsweise ein Rechteckrahmen bzw. bilden mehrere Anpresselemente einen Rechteckrahmen aus. Bei einer derartigen Ausgestaltung ist das Abdichtelement besonders effektiv an die Fuge angepasst und kann besonders dicht an an die Fuge angrenzende Abschnitte angelegt werden.

In einer Weiterbildung des Verfahrens kann ein Folienelement zwischen Abdichtelement und Raupe gelegt werden, wobei das Folienelement vorzugsweise wenigstens an die Raupe angrenzende Abschnitte des Flächenelementes und/oder Rahmenelementes überdeckt. Durch ein derartiges Folienelement wird wirkungsvoll verhindert, dass Abdichtelement und Bestandteile der die Fuge ausbildenden Elemente miteinander verkleben. Dadurch wird das Verfahren also insgesamt vereinfacht. In einer konkreten Ausgestaltung kann das Abdichtelement zumindest teilweise mit einem Folienelement bedeckt werden, vorzugsweise jedenfalls in den Bereichen, die mit der Raupe und/oder dem Flächenelement und/oder dem Rahmenelement in Kontakt kommen. Das Abdichtelement kann also schon vor einer Kontaktierung mit dem Flächenelement und/oder Rahmenelement mit einem Folienelement ausgestattet werden, das beispielsweise eine Unterseite des Abdichtelementes vollständig oder teilweise bedeckt. Insbesondere werden Anpresselemente (wenn vorgesehen) durch das Folienelement überdeckt.

Das Folienelement kann (unmittelbar) nach dem Entfernen des Abdichtelementes von dem Flächenelement bzw. Rahmenelement ebenfalls (ggf. gemeinsam mit dem Abdichtelement) entfernt werden. Bevorzugt ist es jedoch, dass das Folienelement erst nach dem Aushärten des Kleb- und/oder Dichtstoffes entfernt wird. Dadurch wird das Ziel eines möglichst planen Ausfüllens der Fuge mit Kleb- und/oder Dichtstoff weiter verbessert. Außerdem bietet das Folienelement auch in synergistischer Weise einen Schutz während des Aushärtens des Kleb- und/oder Dichtstoffes. Das Folienelement dient also in einem solchen Fall gleichzeitig zwei Funktionen, so dass der Materialeinsatz bei der Herstellung bzw. Verfüllung der Fuge auf effektive Weise reduziert wird.

Das Verfahren kann zumindest teilweise im Fließbandprinzip durchgeführt werden derart, dass zunächst der Kleb- und/oder Dichtstoff in die Fuge eingebracht wird und Flächenelement und Rahmenelement gegeneinander positioniert werden, wobei das Flächenelement mit dem Rahmenelement sowie dem Folienelement weitergeführt wird und (erst) nach dem Aushärten des Kleb- und/oder Dichtstoffs das Folienelement entfernt wird.

Die obige Aufgabe wird weiterhin gelöst durch eine Einheit aus einem Flächenelement (insbesondere Solarpanel) und einem Rahmenelement (insbesondere Dachziegel), wobei zwischen Flächenelement und Rahmenelement eine Fuge ausgebildet ist, die mit einem Kleb- und/oder Dichtstoff gemäß dem oben beschriebenen Verfahren ausgefüllt ist. Insbesondere schließt die Raupe bündig (und plan) mit dem Flächen- und Rahmenelement ab. Nachdem als Resultat des Verfahrens eine plane Ausfüllung der Fuge erreicht werden kann, wobei keine überschüssigen Kleb- und/oder Dichtstoffe entfernt werden müssen, ist für den Fachmann anhand einer vorliegenden Einheit erkennbar, ob das Verfahren realisiert wurde oder nicht. Insofern führt das Verfahren zu einer charakteristischen Ausbildung der vorliegenden Einheit, die mit anderen (bekannten) Verfahren nicht erreicht werden kann. Entweder (wenn nur wenig Kleb- und/oder Dichtstoff eingefüllt wird) ist die Oberfläche zwar vergleichsweise glatt bei Verfahren gemäß dem Stand der Technik, aber weist größere Schwankungen, die als Fließbewegungen identifiziert werden können, auf; oder der Kleb- und/oder Dichtstoff schließt bündig mit den angrenzenden Abschnitten des Flächenelementes bzw. Rahmenelementes ab, weist jedoch eindeutige Spuren (Aufrauhungen) auf, die aus dem Entfernen von Kleb- und/oder Dichtstoff resultieren. Die erfindungsgemäße Einheit aus einem Flächenelement und einem Rahmenelement ist auf einfache Weise, ohne das übermäßige Austreten von Kleb- und/oder Dichtstoff, realisierbar.

Die oben genannte Aufgabe wird weiterhin gelöst durch ein Werkzeug für das obige Verfahren, mit einem Abdichtelement, das ein flächiges Trägerelement mit einer Oberseite und einer Unterseite umfasst, und einem an die Unterseite des Trägerelementes angeordneten, insbesondere rechteckförmigen, Dichtrahmen zur Abdichtung einer Öffnung einer Fuge zwischen einem Flächenelement und einem Rahmenelement und zum Andrücken des Flächenelementes in Richtung einer Raupe aus Kleb- und/oder Dichtstoff innerhalb der Fuge. Der Dichtrahmen ist vorzugsweise aus einem elastischen Material, beispielsweise einem elastischen Polymer (z.B. Polyolefin, insbesondere Polyethylen und/oder Polypropylen). Auch Silikon und/oder Kautschuk ist möglich. In einer konkreten Ausgestaltung ist der Dichtrahmen aus einem aufgeschäumten Material hergestellt. Der Dichtrahmen ist vorzugsweise rechteckförmig und an die zu verfüllende Fuge angepasst. Beispielsweise können Seiten eines durch den Rahmen definierten Rechtecks im Bereich von 30 cm bis 100 cm liegen. Eine Dicke des Rahmens kann (durchschnittlich) 3 cm bis 10 cm betragen. Insgesamt kann durch ein derartiges Werkzeug eine einfache und zuverlässige Verfüllung einer Fuge mit Kleb- und/oder Dichtstoff erreicht werden. Im allgemeinen ist ein Material des Dichtrahmens elastischer (hat also einen geringeren E-Modul) und/oder weicher (nach Shore-A und/oder Mohs) als ein Material des Trägerelementes.

Vorzugsweise weist das Werkzeug eine Presseinheit zum Anpressen des Abdichtelementes gegen das Flächenelement und das Rahmenelement auf. Die Presseinheit kann beispielsweise einen hydraulischen und/oder Elektromotor umfassen oder eine mechanisch wirkende Einheit, die per Hand bedienbar ist.

Die oben genannte Aufgabe wird weiterhin gelöst durch ein System umfassend ein Werkzeug der soeben beschriebenen Art sowie ein Set aus einem Flächenelement und einem Rahmenelement, zwischen denen eine Fuge ausgebildet werden kann, und einem Kleb- und/oder Dichtstoff. Mit einem derartigen System kann auf einfache Art und Weise eine optisch ansprechende und zuverlässige Verfüllung der Fuge realisiert werden.

Die oben genannte Aufgabe wird weiter gelöst durch eine Verwendung eines Werkzeugs der oben beschriebenen Art für ein Verfahren zum Einbringen eines Kleb- und/oder Dichtstoffes in eine Fuge zwischen einem Flächenelement, insbesondere Solarpanel, und einem das Flächenelement aufnehmenden Rahmenelement, insbesondere Dachziegel, vorzugsweise nach dem obigen Verfahren.

Der Kleb- und/oder Dichtstoff, der zum Einsatz kommt, hat vorzugsweise eine Viskosität (im Ausgangszustand, während des Ausbringens z.B. bei 23°C) von mindestens 10³, weiter vorzugsweise mindestens 10⁴, noch weiter vorzugsweise mindestens 10⁵ mPa* s.

Besonders bevorzugt weist die Viskosität einen Wert von 10³ - 2,5 x 10⁶ mPa* s, insbesondere 10⁴ - 2 x 10⁶ mPa* s, am meisten bevorzugt 10⁵ - 10⁶ mPa* s, gemessen nach DIN 53018, mittels einem Anton-Paar Rheometer (Physica MCR 101, Tegelplatte CP 25-1, Temperatur 23°C, Scherrate 0,5 sec⁻¹), auf.

Weitere Ausführungsformen ergeben sich aus den Unteransprüchen.

### Kurze Beschreibung der Zeichnungen

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine schematische Ansicht von oben auf ein Rahmenelement;
- Fig. 2: einen Schnitt entlang der Linie II-II in Fig. 1;
- Fig. 3: das Rahmenelement gemäß Fig. 1 mit einer Klebstoffraupe in einer schematischen Ansicht von oben;
- Fig. 4: einen Schnitt entlang der Linie IV-IV in Fig. 3;
- Fig. 5: eine schematische Ansicht von oben auf das Rahmenelement mit Klebstoffraupe gemäß Fig. 3 und einem Flächenelement;
- Fig. 6: einen Schnitt entlang der Linie VI-VI in Fig. 5;
- Fig. 7: eine schematische Ansicht von oben auf die Anordnung gemäß Fig. 5 einschließlich eines Abdichtelementes;
- Fig. 8: einen Schnitt entlang Linie VIII-VIII in Fig. 7;
- Fig. 9: die Anordnung gemäß Fig. 8 in einer schematischen Ansicht von oben;
- Fig. 10: einen Schnitt entlang der Linie X-X in Fig. 9;
- Fig. 11: eine Schnittdarstellung einer alternativen Ausführungsform mit Folienelement; und
- Fig. 12: eine Schnittdarstellung einer alternativen Ausführungsform des Rahmenelementes.

### Weg zur Ausführung der Erfindung

In der nachfolgenden Beschreibung werden für gleiche und gleich wirkende Teile dieselben Bezugsziffern verwendet.

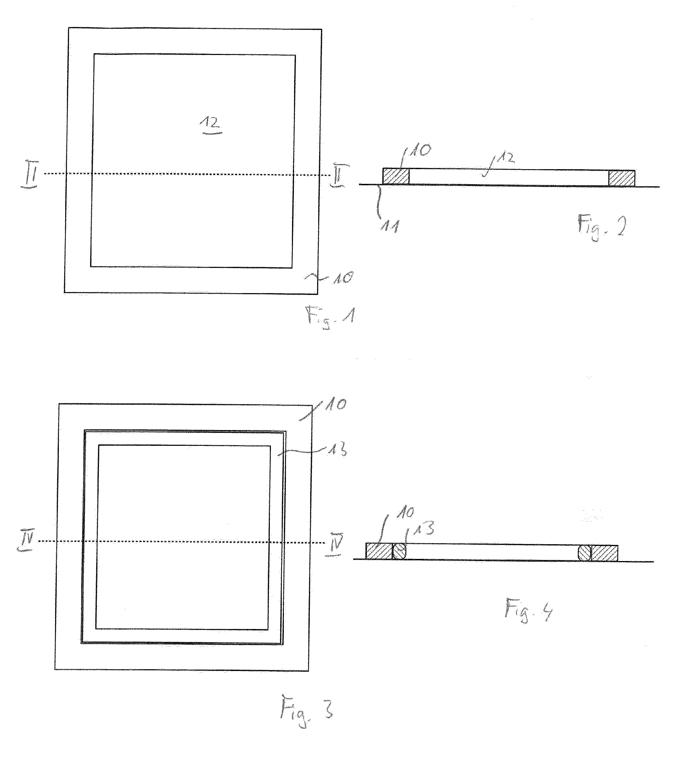

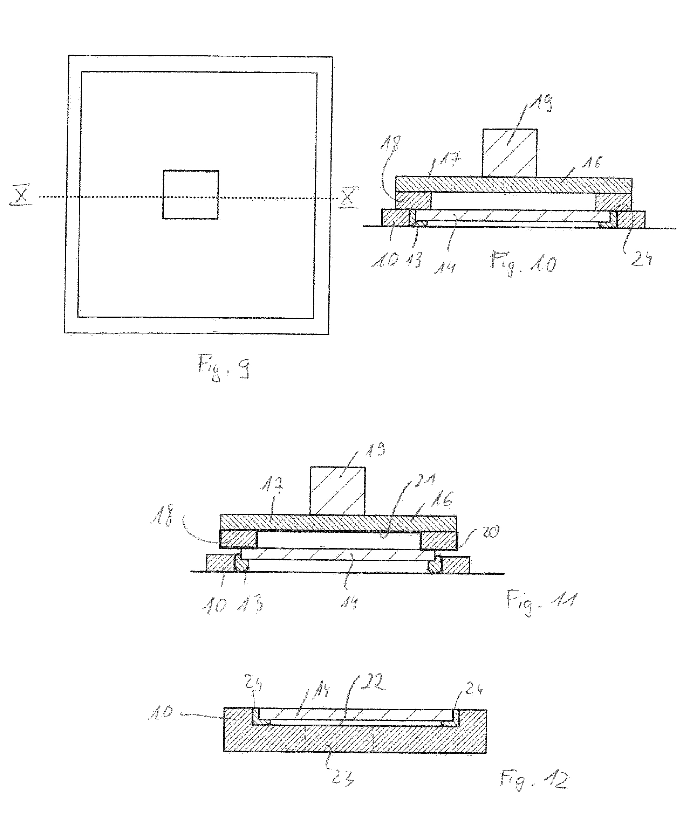

Fig. 1 zeigt ein Rahmenelement 10 in einer Ansicht von oben. In Fig. 2 ist ein Schnitt entlang der Linie II-II in Fig. 1 gezeigt. Der Rahmen gemäß Fig. 1 und 2 ist freistehend, weist also keinen Boden auf, sondern ist auf einem (beliebigen) Untergrund 11 angeordnet (alternativ kann auch ein Boden ausgebildet sein, siehe Fig. 12). Der Rahmen 10 definiert somit eine Öffnung 12, die als Durchbruch ausgebildet ist. Insgesamt ist das Rahmenelement 10 rechteckförmig bzw. quadratisch ausgeformt.

Gemäß den Figuren 3 und 4 wird innerhalb der Öffnung 12 des Rahmenelementes 10 eine Raupe 13 aus Kleb- und/oder Dichtstoff angeordnet. Die Raupe 13 läuft innerhalb des Rahmenelementes 10 um. Fig. 3 zeigt eine Ansicht von oben auf das Rahmenelement 10 mit der Raupe 13. Fig. 4 zeigt einen Schnitt entlang der Linie IV-IV.

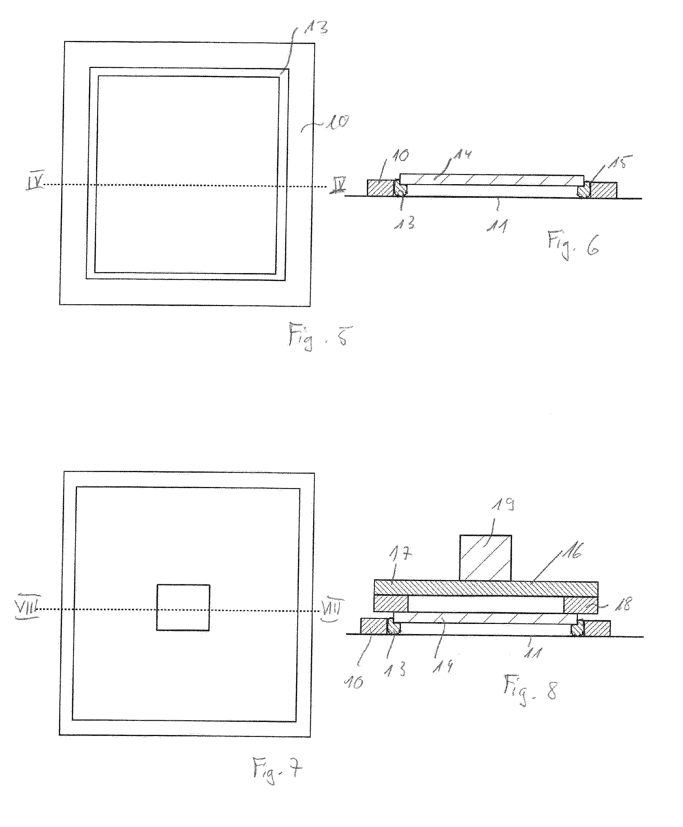

Die Fig. 5 zeigt eine Ansicht von oben auf das Rahmenelement 10 mit der Raupe 13, wobei auf die Raupe 13 ein Flächenelement 14 (siehe Fig. 6) aufgelegt ist.

Die Raupe 13 wird nur leicht durch das (plattenförmige) Flächenelement 14 aufgrund dessen Eigengewicht belastet. Dabei quillt (praktisch) kein Kleb- und/oder Dichtstoff über eine Oberkante 15 des Rahmenelementes.

Fig. 7 zeigt eine Ansicht von oben auf das Rahmenelement 10 sowie das Flächenelement 14 sowie ein auf das Flächenelement aufgelegtes bzw. angelegtes Abdichtelement 16. Fig. 8 zeigt einen Schnitt entlang der Linie VIII-VIII in Fig. 7.

In der Positionierung gemäß Fig. 8 berührt das Abdichtelement 16 bereits das Flächenelement 14, drückt das Flächenelement 14 jedoch (noch) nicht nach unten. Das Abdichtelement 16 umfasst ein Trägerelement 17, das aus einem vergleichsweise starren, harten Material gebildet ist, sowie ein (rahmenförmig umlaufendes) Anpresselement 18 (das Anpresselement 18 ist in Fig. 8 nur im Schnitt gezeigt, läuft jedoch entlang dem Rahmen 10 und bildet ebenfalls eine Rahmenform, insbesondere rechteckförmige Rahmenform aus). Das Abdichtelement 16 kann durch eine Presseinheit 19 angetrieben werden, so dass auf das Flächenelement 14 Druck beaufschlagt wird. Das (rahmenförmige) Anpresselement ist vorzugsweise aus einem vergleichsweise (in Bezug auf das Trägerelement) weichen bzw. elastischen Material gebildet.

Eine Druckbeaufschlagung ist in den Figuren 9 und 10 dargestellt. Fig. 10 zeigt die Position des Rahmenelementes 10 sowie des Flächenelementes 14 nach einer Druckbeaufschlagung durch das Abdichtelement 16 bzw. nach einem Antrieb durch die Presseinheit 19. Wie man in Fig. 10 erkennen kann, wird der Dicht- und/oder Klebstoff der Raupe 13 nach unten gedrängt, so dass kein Kleb- und/oder Dichtstoff austreten kann. Gleichzeitig wird ein bündiger Abschluss des Kleb- und/oder Dichtstoffs mit dem Rahmenelement 10 sowie Flächenelement 14 realisiert. In Fig. 10 ist dann auch die endgültige Positionierung von Flächenelement 14 und Rahmenelement 10 abgeschlossen, so dass sich die endgültige Form einer Fuge 24, innerhalb der die Raupe aus Kleb- und/oder Dichtstoff 13 angeordnet ist, ausbildet.

Fig. 11 zeigt eine Schnittdarstellung analog Fig. 8, wobei zusätzlich ein Folienelement 20 vorgesehen ist, das eine Unterseite 21 des Abdichtelementes 16 abdeckt. Alternativ (nicht in den Figuren gezeigt) kann auch ein Folienelement auf die Raupe 13 (ggf. einschließlich von Abschnitten des Flächenelementes und/oder Rahmenelementes) aufgelegt werden und erst nach dem Aushärten des Kleb- und/oder Dichtstoffes wieder entfernt werden.

Fig. 12 zeigt eine Schnittdarstellung analog Fig. 10 (ohne Abdichtelement 16 und Presseinheit 19), wobei jedoch das Rahmenelement 10 nicht als freistehender Rahmen ausgebildet ist, sondern als kompakter Körper, der einen Boden 22 aufweist. In dem Boden 22 kann ggf. eine Öffnung 23 vorgesehen sein (innerhalb der gestrichelt gezeichneten Linie in Fig. 12), über die das Flächenelement 14 von unten zugänglich ist. Dies ist insbesondere dann vorteilhaft, wenn es sich bei dem Flächenelement 14 um ein Solarpanel handelt, das in einem Dachziegel angeordnet ist.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Rahmenelement
- 11: Untergrund
- 12: Öffnung
- 13: Raupe
- 14: Flächenelement
- 15: Oberkante
- 16: Abdichtelement
- 17: Trägerelement
- 18: Anpresselement
- 19: Presseinheit
- 20: Folienelement
- 21: Unterseite
- 22: Boden
- 23: Öffnung
- 24: Fuge

## Patentansprüche

1. Verfahren zum Einbringen eines Kleb- und/oder Dichtstoffes in eine Fuge (24) zwischen einem Flächenelement (14), insbesondere Solarpanel, und einem das Flächenelement (14) aufnehmenden Rahmenelement (10), insbesondere Dachziegel, umfassend die Schritte:
a) Bereitstellen und Positionieren des Rahmenelementes (10);
b) Einbringen einer Raupe aus Kleb- und/oder Dichtstoff in das Rahmenelement (10);
c) Positionieren des Flächenelementes (14) innerhalb des Rahmenelementes (10) nach dem Schritt b); und
d) Positionieren eines Abdichtelementes (16) derart, dass das Abdichtelement (16) die Fuge (24) sowie wenigstens an die Fuge (24) angrenzende Abschnitte des Flächenelementes (14) und des Rahmenelementes (10) überdeckt.

2. Verfahren nach Anspruch 1,
**dadurch gekennzeichnet, dass**
das Flächenelement (14) in einem Zwischenschritt des Schrittes c) auf die Raupe, insbesondere drucklos, aufgelegt wird und/oder **dadurch gekennzeichnet, dass**
das Flächenelement (14) durch eine Bewegung des Abdichtelementes (16) in seine Endposition überführt wird und/oder
**dadurch gekennzeichnet, dass**
das Abdichtelement (16) derart mit Druck beaufschlagt wird, dass es gegen die an die Fuge (24) angrenzenden Abschnitte des Flächenelementes (14) und des Rahmenelementes (10) angepresst wird.

3. Verfahren nach Anspruch 1 oder 2,
**dadurch gekennzeichnet, dass**
das Abdichtelement (16) zumindest abschnittsweise elastisch ist, insbesondere zumindest abschnittsweise, vorzugsweise in Bereichen, die mit dem Flächenelement (14) und/oder Rahmenelement (10) in Kontakt kommen, ggf. über ein Folienelement (20), aus einem elastischen Material gefertigt ist, und/oder
**dadurch gekennzeichnet, dass**
das Abdichtelement (16) mindestens ein, vorzugsweise elastisches bzw. aus einem elastischen Material gebildetes, Presselement (18) mit einer Kontur aufweist, die vorzugsweise einer Kontur der Fuge (24) entspricht.

4. Verfahren nach einem der vorhergehenden Ansprüche,
**dadurch gekennzeichnet, dass**
ein Folienelement (20) zwischen Abdichtelement (16) und Raupe (13) gelegt wird, wobei das Folienelement (20) vorzugsweise wenigstens an die Raupe (13) angrenzende Abschnitte des Flächenelementes (14) und/oder Rahmenelementes (10) überdeckt, und/oder
**dadurch gekennzeichnet, dass**
das Abdichtelement (16) zumindest teilweise mit einem Folienelement (20) bedeckt wird, vorzugsweise jedenfalls in denjenigen Bereichen, die mit der Raupe (13) und/oder dem Flächenelement (14) und/oder dem Rahmenelement (10) in Kontakt kommen.

5. Verfahren nach einem der vorhergehenden Ansprüche, insbesondere nach Anspruch 4
**dadurch gekennzeichnet, dass**
das Folienelement (20) erst nach dem Aushärten des Kleb- und/oder Dichtstoffes entfernt wird.

6. Verfahren nach einem der vorhergehenden Ansprüche, insbesondere nach Anspruch 4 oder 5,
**dadurch gekennzeichnet, dass**
das Verfahren zumindest teilweise im Fließbandprinzip durchgeführt wird vorzugsweise derart, dass zunächst der Kleb- und/oder Dichtstoff in die Fuge eingebracht wird sowie Flächenelement (14) und Rahmenelement (10) gegeneinander positioniert werden, wobei das Flächenelement (14) mit dem Rahmenelement (10) sowie dem Folienelement (20) weitergeführt wird und nach der Aushärtung des Kleb- und/oder Dichtstoffes das Folienelement (20) entfernt wird.

7. Einheit aus einem Flächenelement (14), insbesondere Solarpanel, und einem Rahmenelement (10), insbesondere Dachziegel, wobei zwischen Flächenelement (14) und Rahmenelement (10) eine Fuge (24) ausgebildet ist, die mit einem Kleb- und/oder Dichtstoff nach dem Verfahren nach einem der vorhergehenden Ansprüche ausgefüllt ist.

8. Werkzeug für das Verfahren nach einem der Ansprüche 1 bis 6 oder zur Herstellung der Einheit nach Anspruch 7, mit einem Abdichtelement (16), umfassend ein flächiges Trägerelement (17) mit einer Oberseite und einer Unterseite und einem an die Unterseite des Trägerelementes (17) angeordneten, insbesondere rechteckförmigen, Dichtrahmen (18) zur Abdichtung einer Öffnung einer Fuge zwischen einem Flächenelement (14) und einem Rahmenelement (10) und zum Andrücken des Flächenelementes (14) in Richtung einer Raupe (13) aus Kleb- und/oder Dichtstoff innerhalb der Fuge.

9. Werkzeug nach Anspruch 8,
**gekennzeichnet durch**
eine Presseinheit (19) zum Anpressen des Abdichtelementes (16) gegen das Flächenelement (14) und das Rahmenelement (10).

10. System umfassend ein Werkzeug nach einem der Ansprüche 8 oder 9 sowie ein Set aus einem Flächenelement (14) und einem Rahmenelement (10), zwischen denen eine Fuge (24) ausgebildet werden kann, und einem Kleb- und/oder Dichtstoff.

11. Verwendung eines Werkzeugs nach Anspruch 8 oder 9 für ein Verfahren zum Einbringen eines Kleb- und/oder Dichtstoffes in eine Fuge (24) zwischen einem Flächenelement (14), insbesondere Solarpanel, und einem das Flächenelement aufnehmenden Rahmenelement (10), insbesondere Dachziegel, vorzugsweise nach einem der Ansprüche 1 bis 6.
